# EUROPEAN PATENT APPLICATION

(11) **EP 2 362 693 A1**
(43) Date of publication of application: **31.08.2011**
(21) Application number: 10305171.0
(22) Date of filing: 22.02.2010
(51) Int. Cl.: H04W 36/14

(54) **Method of and apparatus for handover of a mobile station between networks**

(71) Applicant: FRANCE TELECOM, 75015 Paris (FR)
(72) Inventor: Saino, Lorenzo, London W14 0AH (GB)
(74) Representative: Boire, Philippe Maxime Charles

(57) **Abstract**

The invention relates to a mobile station connectable to a source IP access network and a target IP access network, the source IP access network and the target IP access network being connected to a mobile core network via a generic access network controller (GANC), the method comprising: register request means for requesting registration with a first GAN controller governing a bridge between the source IP access network and the mobile core network, the register request means being operable to request registration with a second GAN controller governing a bridge between the target IP access network and the mobile core network while the mobile station is registered with the first GAN controller, connection means for disconnecting from the source IP access network and connecting to the target IP access network; and deregister means for de-registering from the first GAN controller.

## Description

### Field of the Invention

The present invention relates in general to a method and apparatus for handover of a mobile station between networks. Particularly but not exclusively, the invention relates to a method of handovers between heterogeneous Internet Protocol (IP) access networks based on Generic Access Network (GAN) or Unlicensed Mobile Access (UMA) technology.

### Background of the Invention

Generic Access Network (GAN), previously known as Unlicensed Mobile Access (UMA), is a technology providing bearer-agnostic access to a 3GPP -compliant mobile core network.

This technology provides two valuable capabilities in particular. Firstly, it enables access to the mobile core network from any generic IP (Internet Protocol) access network. For instance, this technology can enable the access to mobile network services from devices equipped with WiFi, Bluetooth, WiMAX or even wired network interfaces backhauled to the mobile network through a generic IP network, such as the public Internet. Secondly, it provides the capabilities to seamlessly perform inter-system handovers between 3GPP cellular access networks, such as GERAN (GSM EDGE Radio Access Network) or UTRAN (UMTS Radio Access Network), and any IP-based access network, such as those mentioned above.

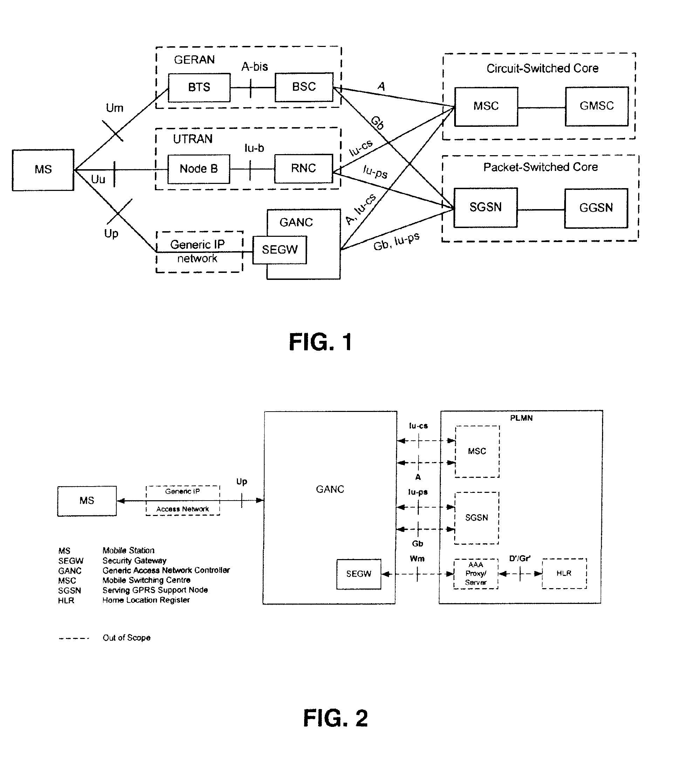

As illustrated in FIG 1 and FIG 2, bridging between a generic IP access network and a 3GPP-compliant core network is carried out by a GAN Controller (GANC), previously known as UMA Network Controller (UNC). This node acts as a gateway between the two networks for both user and control plane. The interconnection between GANC and mobile core network is realised through the same interfaces used to interconnect the mobile core network with UMTS and GSM radio access networks, which are the interfaces A, Gb, Iu-CS and Iu-PS, specified by 3GPP. The use of already standardised interfaces for the connection to the core network results in two important consequences. Firstly, no modifications are required in the core network to support GAN as access network. Therefore, all existing core network capabilities can be reused. Second, all services currently provided to UMTS and GSM subscribers can be transparently provided to GAN subscribers as well.

The adoption of such technology provides advantages to both mobile operators and end users. Firstly, GAN reduces the load on an operators' cellular access network. In fact, GAN enables GSM/UMTS radio access networks to be by passed and the traffic to be injected directly to mobile core entry nodes. Such a characteristic allows operators to considerably reduce costs related to their access network. In fact, it has been estimated that 50% of voice traffic and 70% of data traffic are originated indoors (V. Chandrasekhar and J. G. Andrews, "Femtocell networks: a survey", IEEE Communications Magazine, September 2008), where it is more likely to have availability of alternative unlicensed radio access networks, such as WiFi or Bluetooth. As a consequence, rerouting part of this large amount of traffic over those alternative access networks can lead to a considerable reduction of costs in terms of both CAPEX and OPEX. In addition, due to the recent large increase in the diffusion of smart-phones and USB 3G dongles, the usage of mobile data services has dramatically increased, urging network operators to deal with access network capacity issues. GAN/UMA could also represent an effective solution for tackling this problem.

Secondly, the use of the abovementioned alternative radio technologies in addition to GSM/UMTS improves indoor coverage. This characteristic could be regarded as very valuable especially for end users living in areas with poor indoor coverage, such as rural areas or countries with reduced coverage of GSM/LTMTS access network.

State-of-the-art GAN technology, as described in the 3GPP TS 43.318, "Generic Access Network (GAN); Stage 2" version 8.4.0 and in the 3GPP TS 44.318, "Generic Access Network (GAN); Mobile GAN interface layer 3 specification", version 8.5.0, provides methods for executing handovers between a GSM/UMTS access network and any generic IP access network (e.g. WiFi, WiMAX, Bluetooth). However, it does not provide mechanisms for executing handovers between homogeneous or heterogeneous IP access technologies, such as handovers WiFi-WiFi, WiFi-WiMAX or WiFi-Bluetooth. Currently, executing a handover between IP access networks with the support of GAN technology is only possible by passing through a GSM/UMTS access network. For instance, if a handover between two WiFi Access Points (AP) is required, it is necessary firstly to perform a handover from the source AP to GSM/UMTS access network and then another handover from the latter to the target WiFi AP. This mechanism is very inefficient because it would require considerable time to perform the complete handover procedure and additional signalling traffic. In addition, if no GSM/UMTS coverage is available, the handover cannot take place.

Some approaches have been proposed to address the execution of handovers between homogeneous or heterogeneous IP access networks.

For instance, Mobile IP technology provides capabilities for performing handovers between bearer-agnostic IP access networks. More specifically, handovers of delay-sensitive traffic (such as voice) are addressed by the "Low-Latency Handoffs in Mobile IPv4" for IPv4 networks (defined in IETF RFC 4881) and "Fast Handovers for Mobile IPv6" for IPv6 networks (defined in IETF RFC 4096). However, these technologies have a series of drawbacks. First of all, the stand-alone deployment of Mobile IP does not enable access to 3GPP communication services from an IP access network. In fact, a bridging function, like GAN, would still be required. Second, this technology causes inefficient traffic routing if the IP endpoint to which a Mobile IP-enabled host is communicating with (Correspondent Node (CN) in Mobile IP terminology) is not supporting Mobile IP. Third, in the case of IPv4 networks, which, represent the vast majority of IP networks currently deployed, the interoperability with Network Address Translation (NAT) devices could be problematic and require the presence of additional network elements (such as a Foreign Agent (FA) in the visited network) to address it.

Another example of prior art enabling handovers between IP access networks is represented by the IP Multimedia Subsystem (IMS). This technology is able to provide bearer-agnostic handovers, but at the cost of deploying an expensive infrastructure in the mobile core network and having enabled mobile terminals.

### Summary of the Invention

Accordingly, a first aspect of the invention provides a mobile station connectable to a source IP access network and a target IP access network, the source IP access network and the target IP access network being connected to a mobile core network via a generic access network controller (GANC), the mobile station comprising: register request means for requesting registration with a first GAN controller governing a bridge between the source IP access network and the mobile core network, the register request means being operable to request registration with a second GAN controller governing a bridge between the target IP access network and the mobile core network while the mobile station is registered with the first GAN controller, connection means for disconnecting from the source IP access network and connecting to the target IP access network; and deregister means for de-registering from the first GAN controller.

A second aspect of the invention provides a method of handover of a mobile station from a source IP access network to a target IP access network, the source IP access network and the target IP access network being connected to a mobile core network via a generic access network controller (GANC), the method comprising: registering, with a first GAN controller governing a bridge between the source IP access network and the mobile core network, and while the mobile station is registered with the first GAN controller, registering with a second GAN controller governing a bridge between the target IP access network and the mobile core network; handing over from the source IP access network to the target IP access network; and de-registering from the first GAN controller.

A third aspect of the invention provides a method of handover of a mobile station from a source IP access network to a target IP access network, the source IP access network and the target IP access network being connected to a mobile core network via a generic access network controller (GANC), the method comprising: receiving a register request from a mobile station; determining if the mobile station is already registered, wherein on determining that the mobile station is already registered, the method further comprises determining if the mobile station is capable of a GAN-GAN handover wherein if it is determined that the mobile station is capable of a GAN-GAN handover accepting the register request and allowing multiple registrations of the mobile station to be maintained.

A fourth aspect of the invention provides a generic access network controller comprising: register means for receiving a register request from a mobile station; a processor for determining if the mobile station is already registered, wherein on determining that the mobile station is already registered, the processor is operable to determine if the mobile station is capable of a GAN-GAN handover and wherein if it is determined that the mobile station is capable of a GAN-GAN handover the processor is operable to accept the register request and allow multiple registrations of the mobile station to be maintained.

Aspects of the invention enable the execution of bearer-agnostic handovers between homogeneous or heterogeneous IP access networks with the support of GAN/UMA technology.

The approach of enabling such handovers through enhancements to state-of-the-art GAN technology provides several advantages in comparison to other prior art. Firstly, no modifications are required to the mobile core network, as it is required, for instance, by IMS. In fact, the apparatus hereby described interconnects to the core network through already standardised interfaces. Secondly, all the mobile network services provided to cellular access network subscribers can be provided to generic IP access network subscribers transparently. Thirdly, those handovers can be implemented with reasonable modifications to state-of-the-art GAN equipment. Therefore, since GAN/UMA technology is already widely implemented and deployed, embodiments of the invention could be deployed with minor investments and service disruptions.

In embodiments of the invention:
■ the mobile station transmits a register request including an indication as to whether or not the mobile station has the capability of performing a GAN-GAN handover.
■ the mobile station registers with the first GAN controller via a first physical mobile station network interface and registers with the second GAN controller via a second different physical mobile station network interface.
■ the mobile station deregisters from the first GAN controller before attempting to register with a third GAN controller.
■ the mobile station checks for paging requests on one network interface at a time.
■ the mobile station only checks for paging requests on the network interface via which it last registered with a GAN controller.
■ the register request includes an indication of the status of the GAN protocol entities of the mobile station if the mobile station is already registered at a GAN controller
■ the register request includes an indication of the radio access technology used by the mobile station
■ the method of handover further comprises determining if the physical address of the network interface from which the mobile station is attempting registration corresponds to a physical address of an active registration record for that mobile station wherein if the physical address of the network interface from which the mobile station is attempting registration corresponds to a physical address of an active registration record, the register request is rejected or the register request is accepted and the active registration record is overwritten, otherwise if the physical address of the network interface from which the mobile station is attempting registration does not correspond to a physical address of an active registration record, the register request is accepted and the active registration record is maintained
■ the method of handover further comprises checking the physical address of the radio access point to which the mobile station is attached to determine if it matches any other registration record corresponding to the mobile station wherein on determining that the physical address of the radio access point does not match any other registration record, the register request is accepted.
■ an upper limit is set on the number of simultaneous registrations accepted for one mobile station.
■ the method of handover further comprises receiving a paging request from the core network and wherein if the Location Area Identity and the Temporary Mobile Subscriber Identity of the request message correspond to a plurality of registration records, the method further comprises transmitting the paging request to each physical address corresponding to each of the registration records, and accepting only the first response received from the physical addresses to which the paging request was transmitted.
■ the register request received includes an indication of the radio access technology used by the mobile station and wherein the GAN controller optimises transmission parameters according to the indication.

At least parts of the methods according to the invention may be computer implemented. The methods may be implemented in software on a programmable apparatus. They may also be implemented solely in hardware or in software, or in a combination thereof.

Since at least parts of the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

### Brief Description of the Drawings

Embodiments of the invention will now be described, by way of example only, and with reference to the following drawings in which:-
Figure 1 is a schematic diagram of Generic Access Network (GAN) functional architecture and its mapping in a 3GPP mobile network
Figure 2 is a schematic diagram illustrating in more detail Generic Access Network (GAN) functional architecture indicating the interfaces between a GAN network component and other network components
Figure 3 is a schematic diagram of illustrating inter-GANC and intra-GANC handovers.
Figure 4A is a communication diagram illustrating message flow of an inter-GANC circuit-switched handover from a GAN A/Gb mode to a GAN A/Gb mode connection according to a first embodiment of the invention;
Figure 4B is a communication diagram illustrating the message flow of an inter-GANC circuit-switched handover from a GAN Iu mode to a GAN Iu mode connection according to a further embodiment of the invention;
Figure 4C is a communication diagram illustrating the message flow of an inter-GANC circuit-switched handover from a GAN Iu mode to a GAN Iu mode connection and the IMSI of the mobile station is not reported in the Relocation Request message, according to a further embodiment of the invention;
Figure 4D is a communication diagram illustrating the message flow of an inter-GANC circuit-switched handover from a GAN A/Gb mode to a GAN Iu mode connection according to a further embodiment of the invention;
Figure 4E is a communication diagram illustrating the message flow of an inter-GANC circuit-switched handover from a GAN A/Gb mode to a GAN Iu mode connection and the IMSI of the mobile station is not reported in the Relocation Request message, according to a further embodiment of the invention;
Figure 4F is a communication diagram illustrating the message flow of an inter-GANC circuit-switched handover from a GAN Iu mode to a GAN A/Gb mode connection according to a further embodiment of the invention;
Figure 4G is a communication diagram illustrating the message flow of an intra-GANC circuit-switched handover from a where both source and target GAN connections are in A/Gb mode according to a further embodiment of the invention;
Figure 4H is a communication diagram illustrating the message flow of an intra-GANC circuit-switched handover from a where both source and target GAN connections are in Iu mode according to a further embodiment of the invention;
Figure 5A is a flow chart of an algorithm according to an embodiment of the invention executed by the GANC upon reception of a GA-RC REGISTER REQUEST message from the MS, to decide whether or not to accept registration.
Figure 5B is a flow chart of an algorithm according to an alternative embodiment of the invention executed by the GANC upon reception of a GA-RC REGISTER REQUEST message from the MS, to decide whether or not to accept registration.
Figure 6 schematically illustrates the behaviour of an MS in an embodiment of the invention listening for paging requests when the MS is in state GA-RC REGISTERED on two different network interfaces.

### Detailed description

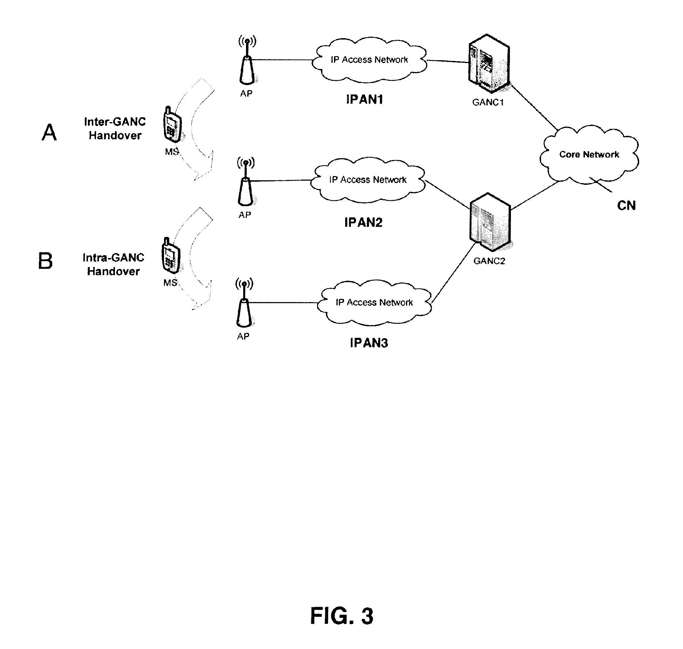

Embodiments of methods of the invention will be described with reference to Figures 3 to 6.

In the different embodiments of the invention, described hereafter, six handover procedures for handovers of a mobile station MS between IP access networks are disclosed. These procedures enable the execution of circuit-switched handovers between two GAN connections established over different network interfaces. More specifically, two different types of procedures are disclosed. The first type is represented by inter-GANC handovers as illustrated in FIG. 3A, which enable the execution of handovers of a mobile station MS from a source IP Access Network IPAN1 and a target IP Access Network IPAN2 when the source and target GAN connections to a core network are established with different GANCs. The second type, as illustrated in FIG. 3B is represented by intra-GANC handovers, which enable the execution of handovers when the source IP Access Network IPAN2 and the target IP Access Network IPAN3 connections to the core network are established with the same GANC2.
In the different embodiments of the invention, the mobility cases addressed by the disclosed handover procedures are as follows.
- Inter-GANC handover from GAN A/Gb mode to GAN A/Gb mode
- Inter-GANC handover from GAN Iu mode to GAN Iu mode
- Inter-GANC handover from GAN A/Gb mode to GAN Iu mode
- Inter-GANC handover from GAN Iu mode to GAN A/Gb mode
- Intra-GANC handover, with the GANC operating in A/Gb mode
- Intra-GANC handover, with the GANC operating in Iu mode

The procedures hereby disclosed include handover messages defined in the 3GPP specifications, without any modification to their payload. However, for the support of these handovers according to embodiments of the invention, minor modifications have been made to the GAN registration process and in the handling of paging requests. In fact, with respect to the registration process, in the GAN-GAN handovers disclosed hereafter a MS is simultaneously registered with a GAN over both the source and the target network interface, while state-of-the-art standard only allows an MS to be registered with one GAN at a time. With respect to the handling of paging requests, minor modifications help to prevent ambiguities if paging requests are received by the GANC when the target MS has multiple active GAN registrations.

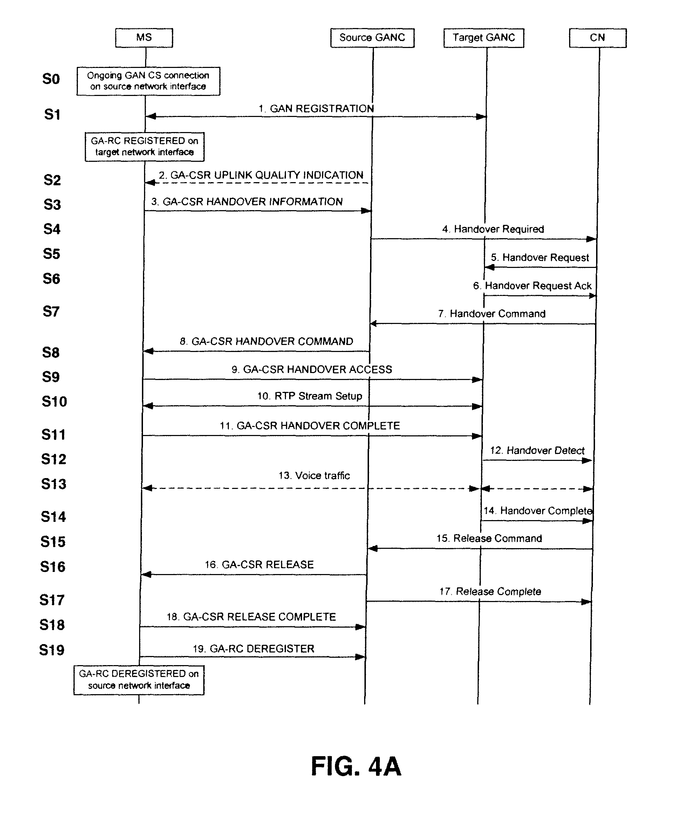

A first embodiment of a method of handover will be described with reference to Figure 4A. In this embodiment the execution of circuit-switched handovers of a mobile station (MS) between two IP access networks, IPAN1 and IPAN2, connected to a mobile core (CN) through two different GANCs, GANC1 and GANC2 both operating in A/Gb mode can be enabled.

In step S0 a mobile station (MS) is registered via a first source network interface such as a WiFi interface with a first source GANC GANC1 governing the bridge between the source IP access network IPAN1 and the 3GPP compliant mobile core network CN. In step S1 while the mobile station (MS) is still registered with the first source GANC1 it registers, via a second target network interface such as a Bluetooth interface, at a second target GANC2 governing the bridge between the target IP access network IPAN2 and the 3GPP compliant mobile core network. The mobile station (MS) is thus simultaneously registered with the source GANC1 and the target GANC2 over both source and target radio interface.

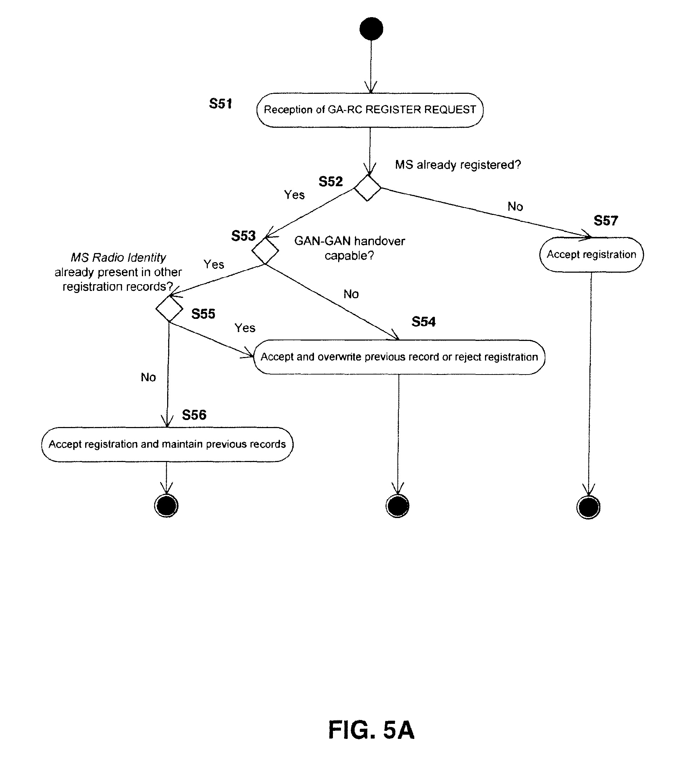

In order to support multiple registrations of the Mobile Station with different GANs, the behaviour of both the GANC and the MS concerning registration procedures is modified as described below and illustrated in FIG. 5A.

When the MS initiates a GAN registration with a target GANC, it specifies in the GA-RC REGISTER REQUEST whether or not it is has the capability of performing GAN-GAN handovers. If the registering MS does not support GAN-GAN handovers, then the GANC does not keep multiple active registrations. Consequently, if the GANC receives a GA-RC REGISTER REQUEST in step S51 from an MS and determines in step S52 that the MS is already registered and subsequently determines in step S53 that the mobile station MS does not support GAN-GAN handovers, it rejects the request or overwrites the previous registration record in step S54 depending on its implementation. Otherwise, if it is determined in step S53 that the MS does support GAN-GAN handovers, the GANC can keep multiple registration records, but under certain limitations, as explained here below.

If a GA-RC REGISTER REQUEST is received from an already registered MS supporting GAN-GAN handovers, in step S55 the GANC analyses the value of the Information Element (IE) MS Radio Identity (as defined in clause 11.2.3 of 3GPP TS 44.318, where it is also called Access Identity), which specifies the physical address of the network interface from which MS is attempting the registration. If the value of this IE is equal to the MS Radio Identity of any of the active registration records for that MS, in step S54 the GANC shall overwrite that registration record or reject the request. Otherwise, if it is determined that the MS identity is not already present in other registration records, the GANC accepts the registration in step S56 (if there is no other impairment preventing it) and replies assigning to the MS a GAN Cell Identity different from any other Cell Identity already assigned to that MS in the other registrations.

The definition of different GANC behaviours on the basis of the MS Radio Identity has been designed in order to prevent the GANC from accepting multiple registration requests that are not required for the execution of GAN-GAN handovers. In fact, if the value of the MS Radio Identity included in the registration request is already present in a registration record at the GANC side, it means that the MS is attempting a registration from an interface over which it was already registered. This could be caused by two reasons. The first is that the MS has lost its connection with the GANC and it is trying to re-register before the GANC has become aware that the previous registration has been lost. The second, less likely, is a failure or a bad implementation of the MS. In both cases, the MS should not be allocated a new registration record, because it is not needed by the MS to perform a GAN-GAN handover. For this reason, a further registration should be allowed only if the MS is attempting a registration from a currently unregistered physical interface, because this is the only case when the registration attempted could be needed by the MS to hand over to the destination GAN connection.

In addition to the analysis of the IE MS Radio Identity, in order to enable handovers between homogeneous access technologies (e.g. WiFi-WiFi) using the same physical interface on the MS, the GANC also analyses the IE AP Radio Identity (defined in clause 11.2.3 of 3GPP TS 44.318, where it is also called Access Identity) in order to appropriately decide whether or not a registration request from an already-registered MS should be accepted. The IE has a structure similar to MS Radio Identity and specifies the physical address of the radio access point to which the MS is attached when is attempting a registration. However, while the MS Radio Identity is reported by the MS in every registration attempt, the AP Radio Identity is reported only if the MS is attempting a registration from an unlicensed radio interface. In fact, if the MS is attempting GAN registration from a wired access technology, such as Ethernet, there is no access point and therefore this IE is not reported.

The reason justifying the analysis of the IE AP Radio Identity lies in the fact that in the case of a handover between homogeneous access technologies using the same network interface, the MS Radio Identity reported by the MS in a new registration request is equal to at least one of the registration records already present at the GANC. For this reason, the GANC would not be able to understand whether the registration request received is aimed at the execution of a handover or it is due to a previous loss of connectivity. Differently, if the AP from which the MS is trying to connect is not listed in any of the previous registration records related to that MS, the GANC can determine that the registration request is aimed at the execution of a handover.

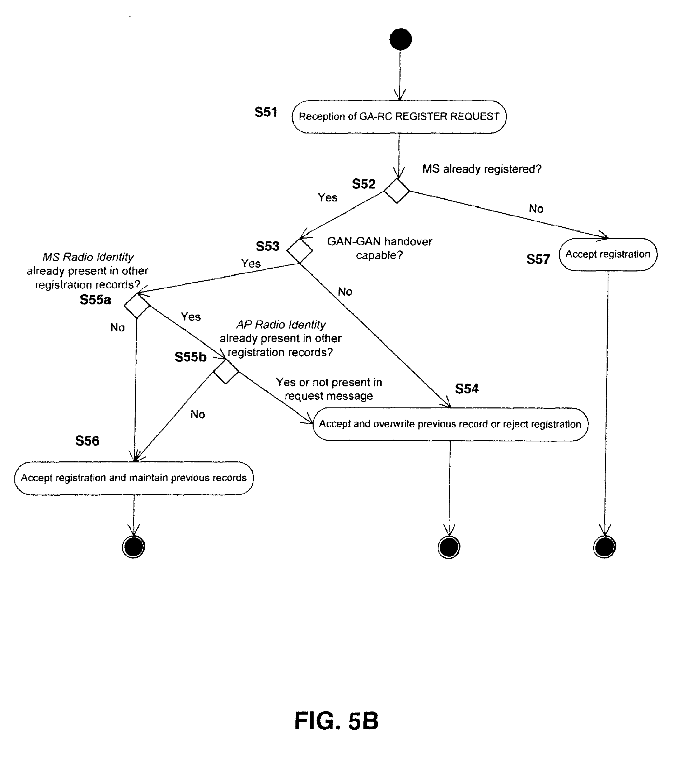

For this reason, in order to enable handovers between homogeneous access technologies, the GANC, at the reception of a registration request from an already registered MS behaves as schematically illustrated in FIG 5B. First, the value of MS Radio Identity is checked in step S55A. If it matches with at least one of the registration records already present, the value of AP Radio Identity is checked in step S55B. If this value is present in the registration request and does not match with any of the other registration records related to the MS, the registration is accepted in step S56. Otherwise, the registration is rejected or overwritten the previous registration record in step S54.

The assignment of a different Cell ID for any further registration enables the successful execution of any handover. In fact, in any handover procedure, the MS reports the target cell in measurement reports and the core network specifies the target cell ID in any Handover Command message S7. If the Cell ID assigned during a second registration is equal to the one assigned in the first registration, no GAN-GAN handovers can be performed, because the target cell ID would be equal to the source cell ID.

The MS, similarly to the GANC, should be capable of supporting multiple registrations with GAN. Specifically, the MS can request further GAN registrations according to the following criteria.
- An MS can initiate a registration request only from a network interface over which it is not yet registered with GAN.
- An MS which is already registered with GAN can request a further registration (over a different network interface) only in order to hand over or to rove-in to the new interface and shall deregister the older GAN connection as soon as the handover or rove-in is performed. Otherwise, it should not attempt any registration request.
- An MS has only one active registration in normal operating conditions. A second simultaneous registration could be requested only in order to hand over or to rove in to another GAN connection.
- An MS does not have more than two simultaneous active registrations with GAN at any time. If the MS intends to request a further registration with GAN and it is already registered twice, it shall deregister over one interface before requesting a new registration.

The specifications for the behaviour of the MS disclosed above have been designed in order to reduce to a minimum the amount of memory and complexity required at the GANC without compromising the capability of performing GAN-GAN handovers at any moment. In fact, without the limitations described above, an MS would be allowed to perform theoretically infinite registrations and, therefore, it could unnecessarily overload the GANC.

With respect to the maximum number of simultaneous registrations allowed, in some embodiments of the invention it is specified that, while the MS cannot have more than 2 simultaneous registrations at a time, the GANC could have more than 2 registration records per MS. The reason for this is justified by the following use case.

An MS is equipped with 3 physical network interfaces: A, B and C, for example a WiFi interface, a WiMAX interface and a Bluetooth interface. Initially, the MS is registered with interface A. The MS loses its connectivity on A (without the GANC being aware) and registers with GAN on interface B. Before the GANC becomes aware of the loss of connection with the MS, the MS wishes to register with interface C to hand over to that interface. If there was also a limit of 2 registrations at the GANC side, the handover from B to C would not be possible, while without this limitation, it would be possible.

In conclusion, those skilled in the art would realise that, even with the limitations proposed, a faulty or malicious MS may be capable of successfully performing several registrations specifying each time a different fake value of MS Radio Identity. As a result, DoS attacks could be conducted quite easily. To address this issue, in a further embodiment of the invention it could be recommendable to implement in the GANC an upper limit to the number of simultaneous registrations allowed being equal to the maximum number of IP network interfaces present on a single device to which the service is addressed. For instance, if the most capable device on the market implementing GAN-GAN handovers is equipped with one WiFi, one WiMAX and one Bluetooth interface - i.e. three IP network interfaces, it is recommendable to set the GANC to accept at most three simultaneous registrations at a time from each MS.

Another enhancement required for supporting the proposed GAN-GAN handover procedures regards the processing of paging requests. In fact, since the latest version of the standard mandates that each MS can be registered with GAN only once at a time, when a GANC receives a paging request from the core network, over either the A/Gb or the Iu interface, it knows without ambiguity over which TCP connection the request has to be forwarded in order to be delivered to the relevant MS. Differently, with the implementation of the modifications hereby disclosed, it may be possible that a GANC receives a paging request while multiple registration records referring to the target MS are present. For this reason, a further embodiment of the invention further comprises an algorithm enabling the GANC to successfully deal with this situation in order to correctly forward the paging request to the relevant MS. More specifically, GANC and MS behave as follows.

**GANC behaviour**: if the GANC receives a paging request from the core network and multiple registration records match with both the Location Area Identity (LAI) and the Temporary Mobile Subscriber Identity (TMSI) specified in the request message, the paging request is forwarded to all the TCP connections related to the target registration records. Then, if the GANC receives multiple paging responses from the MS, it accepts the first one received and discards all the other responses. Anyway, as explained below, in case of standard-compliant behaviour of the MS, the GANC would receive only one paging response. The behaviour in case of multiple responses has been specified only in order to define the behaviour of the GANC in case of non-compliant behaviours of the target MS.

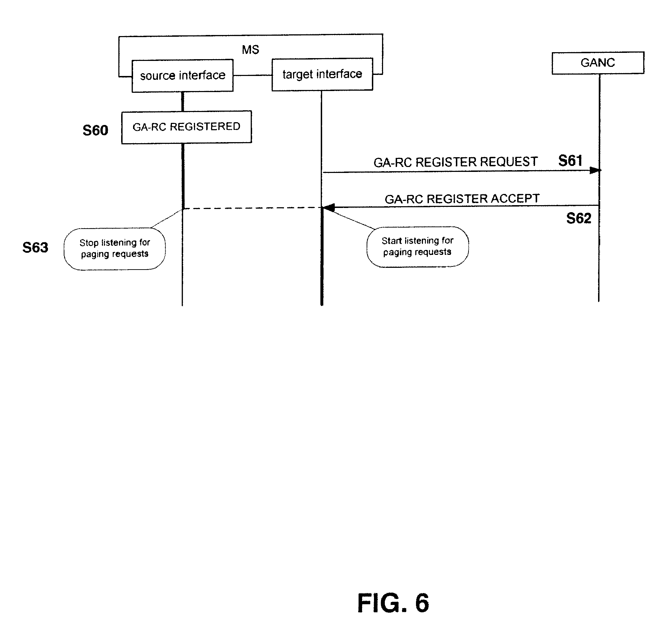

**MS behaviour**: when the MS has two simultaneously active GAN registrations, it listens for paging requests only on one network interface at a time. In other words, it processes paging requests received on the channel on which it is listening and discards the paging requests received on the other channel. The interface on which the MS should listen for paging requests is the one over which it has successfully registered more recently, as illustrated in FIG. 6. In step S60 the MS is registered with a first GANC through a first source interface. In step S61 the MS sends a GA-RC register request to a second GANC via a second network interface, a target interface. In step S62 the GANC transmits an acceptance of the GA-RC request to the MS. In step S63 the MS stops listening for paging requests on the first source network interface and starts listening to paging request on the second target network interface.

The implementation of GAN-GAN handover procedures requires enhancements also in the signalling message set of the Up interface, which is the interface between the GANC and the MS. More specifically, the embodiment of the invention hereby disclosed comprises modifications to the structure of messages already standardised, although it does not require the definition of completely new messages. This characteristic would make it easier to implement these new features on existing platforms and would not cause backward compatibility issues.

The first modification regards the GA-RC REGISTER REQUEST message, which is the message sent by the MS to the GANC to initiate a registration procedure. In state-of-the-art GAN technology, as defined by 3GPP TS 44.318, this message includes a mandatory Information Element (IE) called GSM RR/UTRAN RRC State, indicating the status of GSM RR or UTRAN RRC protocol entities in the MS at the moment of issuing the registration request. This IE provides useful information to the GANC, which might use it to optimise the use of resources and, therefore, improve its performance. For instance, if the MS is in GSM RR DEDICATED state at the moment of the registration, the GANC might foresee that a handover will be executed soon and, therefore, it can optimise its operations on the basis of it.

However, with the enhancements introduced by the embodiment of the invention, an MS would be capable of handing over to GAN not only from GERAN/UTRAN but also from another GAN connection. Therefore, if an MS is attempting a registration while already connected to GAN over another network interface, the GANC should be informed about the state of MS GAN protocol entities at the requests of registration. For this reason, an IE specifying GAN state is included in GAN registration requests if the MS has already another active GAN registration.

To address this issue, this embodiment of the invention proposes including in GA-RC REGISTRATION REQUEST messages the Information Element (IE) GAN State (defined in clause 11.2.20 of the 3GPP TS 44.318), which provides detailed information about the state of the entities of GA-RC, GA-CSR, GA-PSR and GA-RRC protocols. This IE is included in GA-RC REGISTRATION REQUEST messages if the MS supports GAN-GAN handovers and, at the moment issuing the registration request, the MS is already registered to GAN over another network interface.

Another change that may be implemented regards the IE GAN Classmark. This is a standardised information element included in GA-RC DISCOVERY REQUEST and GA-RC REGISTER REQUEST, whose objective is to provide the GANC with information about MS capabilities, such as operating mode supported or type of radio interface.

The main change to be applied to it is the introduction of a field enabling the GANC to know whether or not the MS is capable of performing GAN-GAN handovers. This information allows the GANC to know how to process registration requests from an already registered MS. Specifically, if an MS informs the GANC that it is not capable of executing GAN-GAN handovers, the GANC can reject or overwrite any registration request from already registered MSs, otherwise the GANC can allow an MS to register more times.

The specific implementation of this field could be done using one of the four spare bits of the IE that have been reserved for future use. The field could be called, in order to maintain homogeneity with standard naming conventions, GAN-GAN Handover Capable and its value could be set, for example as:
0: if it is not capable
1: if it is capable

Another change that could be optionally applied to the GAN Classmark regards the field referred to as TGA (Type of Generic Access). This is a 4 bit field which is used to inform the GANC about the radio access technology used by the MS. At the current state of the standard, the possible values it can assume are:
0 0 0 0 no radio
0 0 0 1 Bluetooth
0 0 1 0 WLAN 802.11
1 1 1 1 unspecified

This information is not necessary for successful GAN operations but it could make it possible for the GANC to optimise some parameters, such as packet size and voice codec bit-rate on the basis of it. For this reason, the following option could be added in order to enable the GANC to treat more effectively connections from WiMAX access:
0 1 0 0 WMAN 802.16

The use of code 0100 for this new option is recommended because it would preserve a minimum Hamming distance to other options of 2. It will be appreciated that any other code might be chosen, since the standard has reserved all values except the 4 mentioned above for future use.

Once the mobile station MS has been successfully registered at the target GAN controller, with reference to FIG. 4A further steps of the handover method according to the first embodiment of the invention include in step S2 the transmission of GA-CSR uplink quality indication from the source GANC to the mobile station and the transmission of GA-CSR handover information from the mobile station to the source GANC in step S3. In step S4 the source GANC indicates to the core network CN that handover from the first IP access network to the second IP access network is required. In step S5 the core network sends a handover request to the target GANC, which is acknowledged by the target GANC in step S6. In step S7 the core network CN transmits a handover command to the source GANC. In step S8 a GA-CSR handover command is sent from the source GANC to the mobile station MS. In step S9 GA-CSR handover access message is sent from the mobile station MS to the target GANC. In step S10 RTP stream is set up between the mobile station MS and the target GANC. In step S11 the GA-CSR handover from the first IP access network to the second IP access network is completed and detected by the core network CN in step S12. Voice traffic can be set up between the mobile station and the target GANC in step S13. In step S14 the handover is reported from the target GANC to the core network CN as complete. A release command is then sent from the core network CN to the source GANC in step S 15. A GA-CSR release command is then sent from the source GANC to the mobile station MS in step S16. Indication that the release is complete is sent from the source GANC to the core network in step S17 and from the mobile station MS to the source GANC in step S 18. In step S 19 the mobile MS is deregistered from the source GANC and thus deregistered through the source network interface of the mobile station MS.

The methods according to the embodiments of the invention enable the execution of handovers between heterogeneous Internet Protocol (IP) access networks based on Generic Access Network (GAN) or Unlicensed Mobile Access (UMA) technology. Embodiments of the invention include
- Procedures for executing handovers between heterogeneous IP access networks
- Enhancement to state-of-the-art GAN registration process
- Enhancement to state-of-the-art handling of paging requests generated by a 3^{rd} Generation Partnership Project (3GPP) core network in a Generic Access Network Controller (GANC) and in a GAN-enabled Mobile Station (MS).
- Enhancement to the message set of the stet-of-the-art logical interface between the GANC and the MS

In embodiments of the invention, an MS is able to seamlessly hand over an active communication session between IP access networks, such as Bluetooth, WiFi, WiMAX or even wired connections such as Ethernet, while being able to transparently access all services provided by a 3GPP core network.

The capabilities of executing handovers between IP access networks can provide several benefits. First of all, an end user would be able to hand over between access technologies to optimise the received signal strength or bandwidth available, thus leading to a better user experience and a better utilisation of available network resources. In addition, these capabilities could enable session mobility between terminals equipped with IP network interfaces. For instance, a user could be able to maintain an active session while moving a call between a WiFi handset and a soft phone on its laptop equipped with WiFi or wired IP network interfaces.

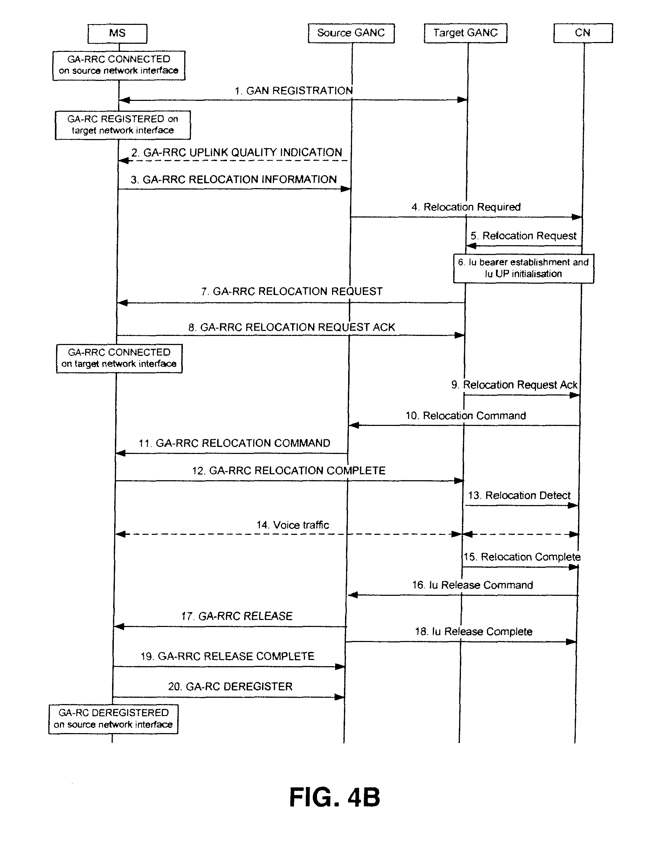

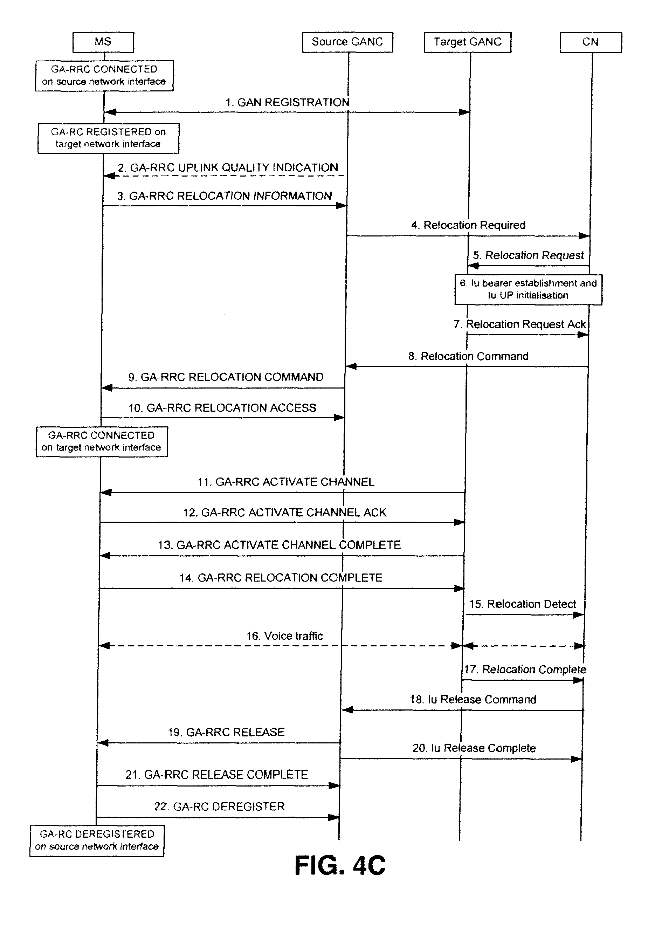

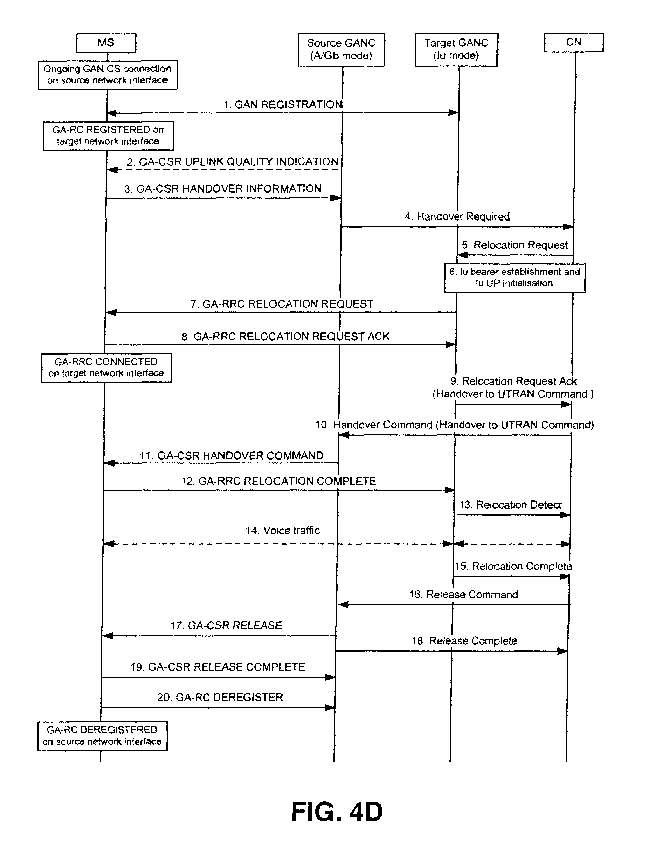

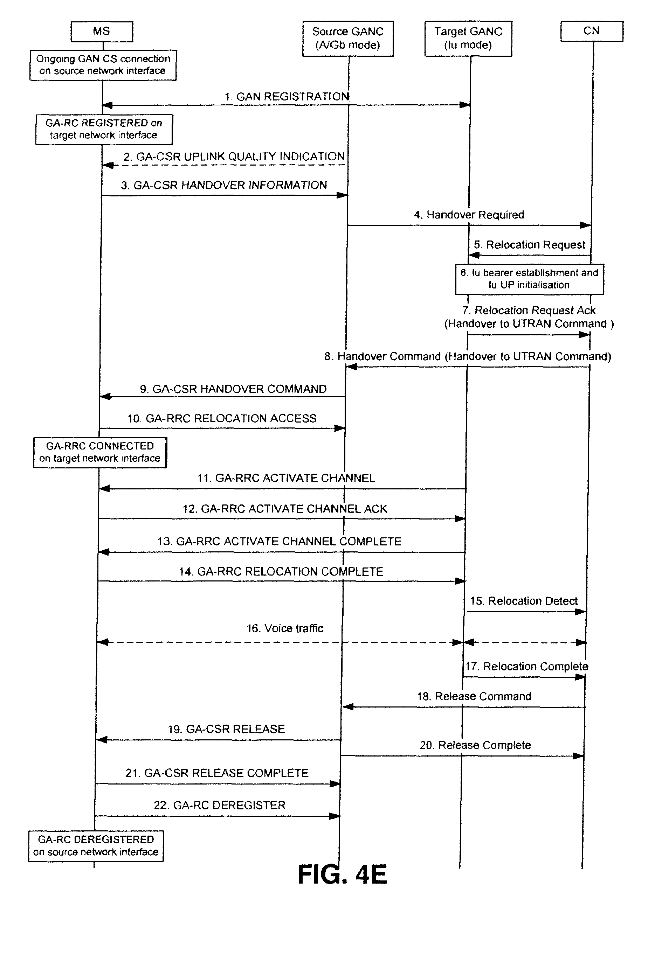

Although the first embodiment of the invention relates to the handover between two IP access networks connected to a mobile core through two different GAN controllers both operating in A/Gb mode it will be appreciated that in alternative embodiments of the invention different configurations may be applied. For example a further embodiment of the invention as illustrated in FIG. 4B enables the execution of circuit-switched handovers between two IP access networks connected to the mobile core through two different GANCs both operating in Iu mode in which the IMSI of the mobile station is present in the relocation request message. In an alternative embodiment of the invention as illustrated in FIG. 4C two different GANCs both operating in Iu mode are used and the IMSI of the mobile station is not present in the relocation request message. The embodiments illustrated in FIG 4D and 4E enable the execution of circuit-switched handovers between two IP access networks connected to the mobile core through different GANCs, in the specific case in which a source GANC operates in A/Gb mode and a target GANC operates in Iu mode. In FIG 4D the IMSI of the mobile station is present in the relocation request message while in FIG 4E the IMSI is absent.

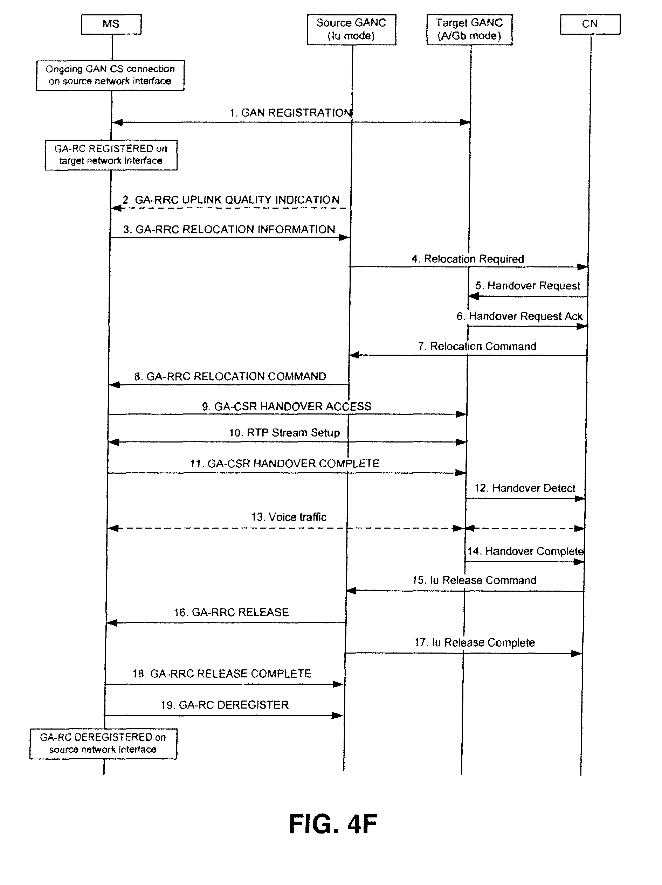

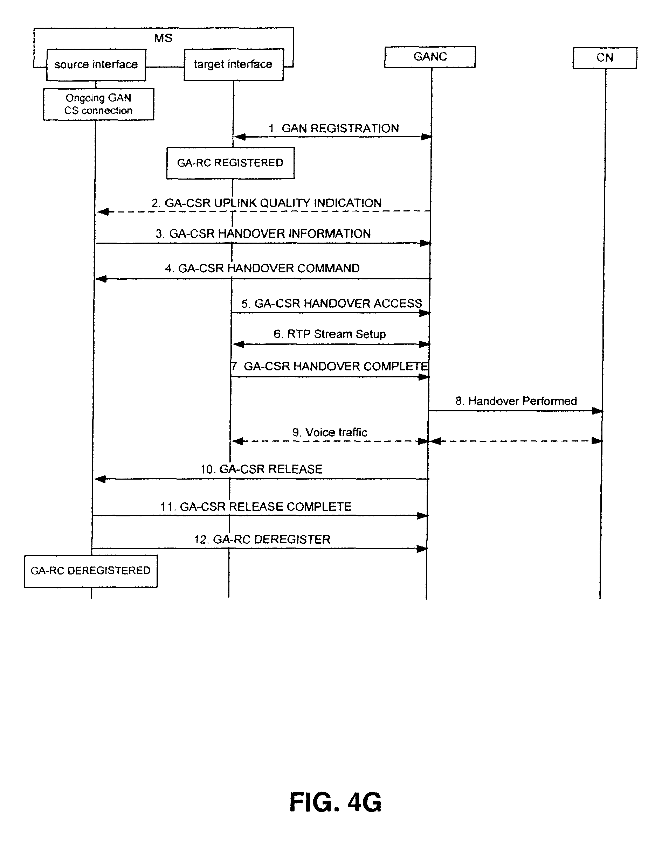

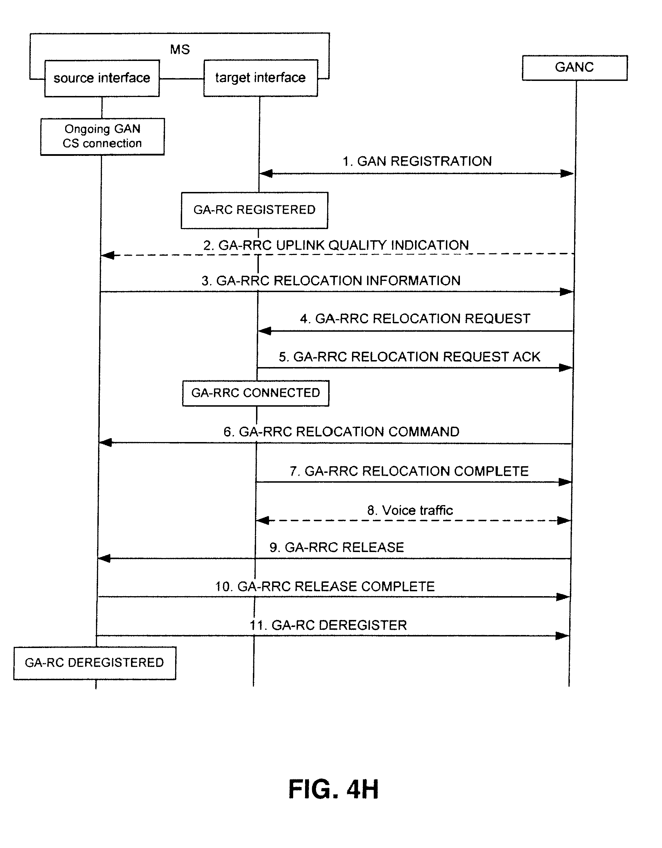

The embodiment illustrated in FIG 4F enables the execution of circuit-switched handovers between two IP access networks connected to the mobile core through different GANCs, in the specific case in which the source GANC operates in Iu mode and the target GANC operates in A/Gb mode. The embodiment illustrated in FIG 4G enables the execution of circuit-switched handovers between two IP access networks connected to the mobile core through the same GANC, operating in A/Gb mode (intra-GANC circuit switched handover). The embodiment illustrated in FIG 4H enables the execution of circuit-switched handovers between two IP access networks connected to the mobile core through the same GANC operating in Iu mode (intra-GANC circuit switched handover).

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. A mobile station connectable to a source IP access network and a target IP access network, the source IP access network and the target IP access network being connected to a mobile core network via a generic access network controller (GANC), the mobile station comprising:
register request means for requesting registration with a first GAN controller governing a bridge between the source IP access network and the mobile core network, the register request means being operable to request registration with a second GAN controller governing a bridge between the target IP access network and the mobile core network while the mobile station is registered with the first GAN controller,
connection means for connecting to the target IP access network and disconnecting from the source IP access network; and
deregister means for de-registering from the first GAN controller.

2. A mobile station according to claim 1, wherein the register request means is operable to transmit a register request including an indication as to whether or not the mobile station has the capability of performing a GAN-GAN handover.

3. A mobile station according to claim 1 or 2, wherein the mobile station comprises a first physical mobile station network interface for registering with the first GAN controller and a second different physical mobile station network interface for registering with the second GAN controller.

4. A mobile station according to any one of claims 1 to 3, wherein the deregister means is operable to deregister the mobile station from the first GAN controller before attempting to register with a third GAN controller.

5. A mobile station according to claim 3 or 4 wherein the mobile station is operable to check for paging requests on one network interface at a time.

6. A mobile station according to claim 5 wherein the mobile station is operable to check for paging requests on the network interface via which it last registered with a GAN controller.

7. A mobile station according to any one of the preceding claims wherein the register request means is operable to transmit a register request including an indication of the status of the GAN protocol entities of the mobile station if the mobile station is already registered at a GAN controller

8. A mobile station according to any one of the preceding claims wherein the register request means is operable to transmit a register request including an indication of the radio access technology used by the mobile station.

9. A method of handover of a mobile station from a source IP access network to a target IP access network, the source IP access network and the target IP access network being connected to a mobile core network via a generic access network controller (GAN), the method comprising:
registering, with a first GAN controller governing a bridge between the source IP access network and the mobile core network, and while the mobile station is registered with the first GAN controller, registering with a second GAN controller governing a bridge between the target IP access network and the mobile core network;
handing over from the source IP access network to the target IP access network; and
de-registering from the first GAN controller.

10. A method of handover of a mobile station from a source IP access network to a target IP access network, the source IP access network and the target IP access network being connected to a mobile core network via a generic access network (GAN), the method comprising:
receiving a register request from a mobile station;
determining if the mobile station is already registered, wherein on determining that the mobile station is already registered, the method further comprises
determining if the mobile station is capable of a GAN-GAN handover wherein if it is determined that the mobile station is capable of a GAN-GAN handover accepting the register request and allowing multiple registrations of the mobile station to be maintained.

11. A method according to claim 10, further comprising determining if the physical address of the network interface from which the mobile station is attempting registration corresponds to a physical address of an active registration record for that mobile station wherein if the physical address of the network interface from which the mobile station is attempting registration corresponds to a physical address of an active registration record, the register request is rejected or the register request is accepted and the active registration record is overwritten, otherwise if the physical address of the network interface from which the mobile station is attempting registration does not correspond to a physical address of an active registration record, the register request is accepted and the active registration record is maintained

12. A method according to claim 11, further comprising checking the physical address of the radio access point to which the mobile station is attached to determine if it matches any other registration record corresponding to the mobile station wherein on determining that the physical address of the radio access point does not match any other registration record, the register request is accepted.

13. A method according to any one of claims 10 to 12, wherein an upper limit is set on the number of simultaneous registrations accepted for one mobile station.

14. A method according to any one of claims 10 to 13, further comprising
receiving a paging request from the core network and wherein if the Location Area Identity and the Temporary Mobile Subscriber Identity of the request message correspond to a plurality of registration records, the method further comprises
transmitting the paging request to each physical address corresponding to each of the registration records, and
accepting only the first response received from the physical addresses to which the paging request was transmitted.

15. A method according to any one of claims 10 to 14 wherein the register request received includes an indication of the radio access technology used by the mobile station and wherein the GAN controller optimises transmission parameters according to the indication.

16. A generic access network controller comprising:
register means for receiving a register request from a mobile station;
a processor for
determining if the mobile station is already registered, wherein on determining that the mobile station is already registered, the processor is operable to
determine if the mobile station is capable of a GAN-GAN handover and wherein if it is determined that the mobile station is capable of a GAN-GAN handover the processor is operable to accept the register request and allow multiple registrations of the mobile station to be maintained.
